# EUROPEAN PATENT SPECIFICATION

(11) **EP 1 414 903 B1**
(45) Date of publication and mention of the grant of the patent: **05.12.2007**
(21) Application number: 02725278.2
(22) Date of filing: 20.03.2002
(51) Int. Cl.: C08L 67/02

(54) **POLYESTER POLYAMIDE MOLDING COMPOSITION**
POLYESTER/POLYAMID-FORMMASSE
COMPOSITION DE MOULAGE DE POLYAMIDE POLYESTER

(30) Priority: 06.04.2001 US 828598
(43) Date of publication of application: 06.05.2004
(73) Proprietor: GENERAL ELECTRIC COMPANY, Schenectady, NY 12345 (US)
(72) Inventor: CHISHOLM, Bret, Ja, Clifton Park, NY 12065 (US); BRISTER, Leonard, Bryan, Gulport, MS 39507 (US)
(74) Representative: Müller, Frank Peter
(86) International application number: PCT/US2002/008688
(87) International publication number: WO 2002/081564

(56) References cited:
- EP-A- 0 518 703
- WO-A-01/36528
- US-A- 6 001 930

## Description

### FIELD OF THE INVENTION

The invention relates to a molding composition comprising a cycloaliphatic polyester resin, a polyamide resin, and a polyester ionomer resin.

### BACKGROUND OF THE INVENTION

Blending of a polyester resin and a polyamide resin offers the advantage of reduced moisture absorption compared to pure polyamide and higher heat compared to purepolyester. However, such blends are incompatible resulting in poor extrusion capability, difficult injection molding, diminished surface appearance, delamination, and poor ductility. The advantage of incorporating sulfonate salt groups into a poly(1,4-butylene terephthalate) polyester is that the sulfonate groups facilitate compatibility between the sulfonated polyester ionomer and polyamide resulting in improved processability by reduced die-swell, improved part surface appearance, and reduced delamination.

U.S. Patent 4,097,446 to Abolins and Holub discloses a wide variety of blends of different thermoplastic resins with a very rapidly crystallizing polyester; namely polybutylene terephthalate and fiber glass. Nylon is shown as an example of a suitable blend resin. Fiber glass is important in obtaining improved processability.

U.S. Patent 5,300,572 to Tajima, et al. relates to moldable polyester resin compositions which include the resin components: (A) between 2 to 98% by weight of a compatibilizing metal sulfonate group-containing aromatic polyester copolymer which is the polycondensation reaction product of (a) an aromatic dicarboxylic acid or its ester-forming derivative, (b) a diol compound or its ester-forming derivative, and (c) an ester-forming compound containing a metal sulfonate group; (B) between 2 to 98% by weight of an additive resin which is one of (B-I) an olefin copolymer which is the copolymerization reaction product between an olefin with at least one of an alpha, beta -unsaturated carboxylic acid or its derivative and a vinyl alcohol or its ester, and (B-II) a polyamide resin; and, optionally (C) between 0 to 96% by weight of a non-compatibilizing aromatic polyester resin.

As set forth in Tajiima, et al. the modified aromatic polyester copolymer having metal-sulfonate-containing units introduced into the copolymer's backbone structure of aromatic polyester copolymer is compatible with both polyolefin and polyamide resins, and serves as a compatibilizer when an unmodified (i.e., one not containing metal-sulfonate units) aromatic polyester is further blended with the modified polyester copolymer and either a polyolefin or a polyamide resin.

### SUMMARY OF THE INVENTION

Blends of cycloaliphatic polyesters and polyamides exhibit die-swell and surging upon extrusion, de-lamination upon molding, and less than desirable properties. These deficiencies detract from favorable properties including good weatherability, low moisture absorption relative to conventional polyamide based thermoplastics, and good mechanical and rheological properties.

A thermoplastic resin composition comprises a polyamide resin, a cycloaliphatic polyester resin, and a compatibilizing amount of a polyester ionomer for enhancing the properties of the blend. Indeed, blends produced in the absence of compatibilizing agent render it nearly impossible to mold the appropriate parts for a complete battery of tests to determine physical and mechanical properties, owing to the deficiencies described above.

According to one embodiment, a functional sulfonate salt "ionomer" group is incorporated into the blend for improving the properties.

### DETAILED DESCRIPTION OF PREFERRED EMBODIMENTS

Overall the blend can have from 5-95 wt.% polyamide and 95-5 wt.% total polyester where at least 1 wt.% and preferably greater than or equal to 30 wt.% of the polyester is sulfonate salt polyester copolymer. The ratio of cycloaliphatic polyester to polyamide in the range of 90:10 to 10:90 % by weight of the entire mixture is preferred. Blends from 80:20 to 50:50 are more preferred, with blends from 85:15 to 60:40 being most preferred.

The polyamide component of the resin blend comprises a suitable polyamide. Typical polyamide resins include polyamide-6, polyamide-6,6, polyamide-11, polyamide-12, polyamide-4,6, polyamide-6,10 and polyamide-6,12, as well as polyamides prepared from terephthalic acid and/or isophthalic acid and trimethylhexamethylenediamine; from adipic acid and m-xylylenediamines; from adipic acid, azelaic acid, 2,2-bis-(p-aminocyclohexyl) propane, and from terephthalic acid and 4,4'-diaminodicyclohexylmethane. Mixtures and/or copolymers of two or more of the foregoing polyamides or prepolymers thereof, respectively, are also within the scope of the present invention.

Furthermore, the polyamides may be made by any known method, including the polymerization of a monoamino monocarboxylic acid or a lactam thereof having at least 2 carbon atoms between the amino and carboxylic acid group, of substantially equimolar proportions of a diamine which contains at least 2 carbon atoms between the amino groups and a dicarboxylic acid, or of a monoaminocarboxylic acid or a lactam thereof as defined above, together with substantially equimolar proportions of a diamine and a dicarboxylic acid. The dicarboxylic acid may be used in the form of a functional derivative thereof, for example, a salt, an ester or acid chloride.

A detailed description of polyamides and polyamide precursor materials is provided in U.S. Patent 4,755,566 to Yates. Other useful polyamides often referred to as "Nylons" are disclosed in U.S. Patents 4,732,938 to Grant et al., 4,659,760 to Van der Meer, and 4,315,086 to Ueno et al.. The polyamide used may also be one or more of those referred to as "toughened nylons", which are often prepared by blending one or more polyamides with one or more polymeric or copolymeric elastomeric toughening agents. Examples of these types of materials are given in U.S. Patents 4,174,358; 4,474,927; 4,346,194; 4,251,644; 3,884,882; 4,147,740.

The preferred polyamides for this invention are polyamide-6; 6,6; 6,12; 11 and 12, with the most preferred being polyamide-6,6.

The cycloaliphatic polyester resin comprises a polyester having repeating units of the formula I: 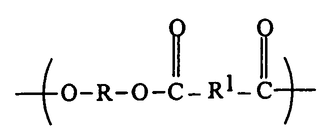 where R and R1 is a cycloalkyl containing radical.

The polyester is a condensation product where R is the residue of cycloalkane containing diol having 6 to 20 carbon atoms or chemical equivalent thereof, and R1 is the decarboxylated residue derived from a cycloalkane containing diacid of 6 to 20 carbon atoms or chemical equivalent thereof.

The present cycloaliphatic polyesters are condensation products of aliphatic diacids, or chemical equivalents and aliphatic diols, or chemical equivalents. The present cycloaliphatic polyesters may be formed from mixtures of aliphatic diacids and aliphatic diols but must contain at least 50 mole % of cyclic diacid and cyclic diol components, the remainder, if any, being linear aliphatic diacids and/or diols. The cyclic components are necessary to impart good rigidity to the polyester.

The polyester resins are typically obtained through the condensation or ester interchange polymerization of the diol or diol equivalent component with the diacid or diacid chemical equivalent component.

R and R1 are preferably cycloalkyl radicals independently selected from the following formula:

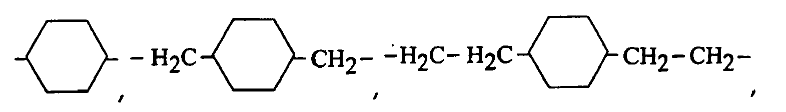

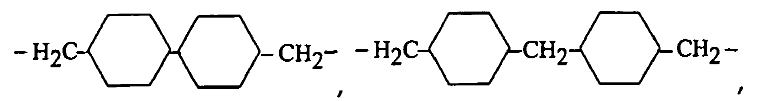

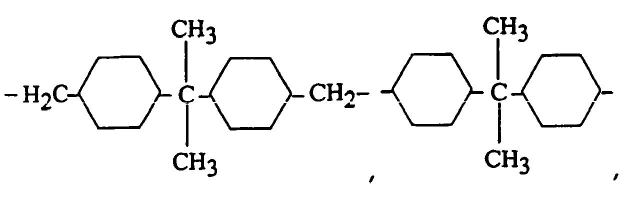

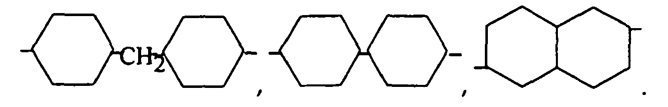

The preferred cycloaliphatic radical R1 is derived from the 1,4-cyclohexyl diacids and most preferably greater than 70 mole % thereof in the form of the trans isomer. The preferred cycloaliphatic radical R is derived from the 1,4-cyclohexyl primary diols such as 1,4-cyclohexyl dimethanol, most preferably more than 70 mole % thereof in the form of the trans isomer.

Other diols useful in the preparation of the polyester resins of the present invention are straight chain, branched, or cycloaliphatic alkane diols and may contain from 2 to 12 carbon atoms. Examples of such diols include but are not limited to ethylene glycol; propylene glycol, i.e., 1,2- and 1,3-propylene glycol; 2,2-dimethyl-1,3-propane diol; 2-ethyl, 2-methyl, 1,3-propane diol; 1,3- and 1,5-pentane diol; dipropylene glycol; 2-methyl-1,5-pentane diol; 1,6-hexane diol; dimethanol decalin, dimethanol bicyclo octane; 1,4-cyclohexane dimethanol and particularly its cis- and trans-isomers; triethylene glycol; 1,10-decane diol; and mixtures of any of the foregoing. Preferably a cycloaliphatic diol or chemical equivalent thereof and particularly 1,4-cyclohexane dimethanol or its chemical equivalents are used as the diol component.

Chemical equivalents to the diols include esters, such as dialkylesters, diaryl esters.

The diacids useful in the preparation of the aliphatic polyester resins of the present invention preferably are cycloaliphatic diacids. This is meant to include carboxylic acids having two carboxyl groups, each of which is attached to a saturated carbon. Preferred diacids are cycle or bicyclo aliphatic acids, for example, decahydro naphthalene dicarboxylic acids, norbornene dicarboxylic acids, bicyclo octane dicarboxylic acids, 1,4-cyclohexanedicarboxylic acid or chemical equivalents, and most preferred is trans-1,4-cyclohexanedicarboxylic acid or chemical equivalent. Linear dicarboxylic acids like adipic acid, azelaic acid, dicarboxyl dodecanoic acid and succinic acid may also be useful.

Cyclohexane dicarboxylic acids and their chemical equivalents can be prepared, for example, by the hydrogenation of cycloaromatic diacids and corresponding derivatives such as isophthalic acid, terephthalic acid or naphthalenic acid in a suitable solvent such as water or acetic acid using a suitable catalyst such as rhodium supported on a carrier such as carbon or alumina. See, Friefelder et al., Journal of Organic Chemistry, 31, 3438 (1966); U.S. Patents 2,675,390 and 4,754,064. They may also be prepared by the use of an inert liquid medium in which a phthalic acid is at least partially soluble under reaction conditions and with a catalyst of palladium or ruthenium on carbon or silica. See, U.S. Patents 2,888,484 and 3,444,237.

Typically, in the hydrogenation, two isomers are obtained in which the carboxylic acid groups are in cis- or trans-positions. The cis- and trans-isomers can be separated by crystallization with or without a solvent, for example, n-heptane, or by distillation. The trans-isomer has higher melting and crystallization temperatures and may be preferred. Mixtures of the cis- and trans-isomers are useful herein as well.

When the mixture of isomers or more than one diacid or diol is used, a copolyester or a mixture of two polyesters may be used as the present cycloaliphatic polyester resin.

Chemical equivalents of these diacids include esters, alkyl, esters, e.g., dialkyl esters, diaryl esters, anhydrides, salts, acid chlorides, acid bromides, and the like. The preferred chemical equivalents comprise the dialkyl esters of the cycloaliphatic diacids, and the most favored chemical equivalent comprises the dimethyl ester of the acid, particularly dimethyl-1,4-cyclohexane-dicarboxylate.

A preferred cycloaliphatic polyester is poly(cyclohexane-1,4-dimethylene cyclohexane-1,4-dicarboxylate) also referred to as poly(1,4-cyclohexane-dimethanol-1,4-dicarboxylate) (PCCD) which has recurring units of formula II:

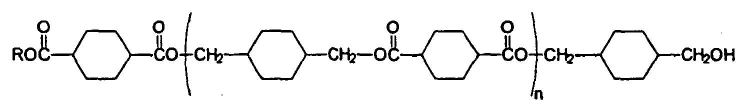

With reference to the previously set forth general formula, for PCCD, R is derived from 1,4 cyclohexane dimethanol; and R1 is a cyclohexane ring derived from cyclohexanedicarboxylate or a chemical equivalent thereof. The PCCD has a cis/trans isomer ratio principally defined by its method of synthesis; the most favorable PCCD may be characterized by an elevated trans isomer content.

The polyester polymerization reaction is generally run in the melt in the presence of a suitable catalyst such as a tetrakis (2-ethyl hexyl) titanate, in a suitable amount, typically about 50 to 200 ppm of titanium based upon the final product.

The preferred aliphatic polyesters used in the present compositions have a glass transition temperature (Tg) which is above 50°C, more preferably above 80°C and most preferably above about 100°C.

Also contemplated herein are the above polyesters with from about 1 to about 50 percent by weight, of units derived from polymeric aliphatic acids and/or polymeric aliphatic polyols to form copolyesters. The aliphatic polyols include glycols, such as poly(ethylene glycol) or poly(butylene glycol). Such polyesters can be made following the teachings of, for example, U.S. Patents 2,465,319 and 3,047,539.

The term polyester ionomer, or sulfonate polyester or metal sulfonate polyester, refers to polyester polymers derived from the reaction residue of an aryl carboxylic sulfonate salt, an aromatic dicarboxylic acid, an aliphatic diol or any of their ester forming derivatives. The ionomer polyester polymers comprise some monovalent and/or divalent sulfonate salt units represented by the formula IIIA: 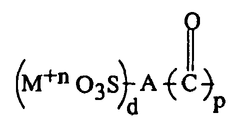 or formula IIIB: 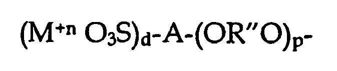 wherein p=1-3; d=1-3, and p+d=2-6, and A is an aryl group containing one or more aromatic rings: for example, benzene, naphthalene, anthracene, biphenyl, terphenyl, oxy diphenyl, sulfonyl diphenyl or alkyl diphenyl, where the sulfonate substituent is directly attached to an aryl ring. These groups are incorporated into the polyester through carboxylic ester linkages. The aryl groups may contain one or more sulfonate substituents; d = 1-3, and may have one or more carboxylic acid linkages; p = 1-3. Groups with one sulfonate substituent (d =1) and two carboxylic linkages (p = 2) are preferred. M is a metal, n = 1-5. Preferred metals are alkaline or alkaline earth metals where n = 1-2. Zinc and tin are also preferred metals. R" is an alkyl group, for example,
-CH₂CH₂-, -CH₂CH₂OCH₂CH₂-, -CH(CH₃)CH₂-, -CH₂CH₂CH₂-,
-CH₂CH₂CH₂CH₂-.

Typical sulfonate substituents that can be incorporated into the metal sulfonate polyester copolymer may be derived from the following carboxylic acids or their ester forming derivatives; sodium sulfo isophthalic acid, potassium sulfo terephthalic acid, sodium sulfo naphthalene dicarboxylic acid, calcium sulfo isophthalate, potassium 4,4'-di(carbomethoxy) biphenyl sulfonate, lithium 3,5-di(carbomethoxy)benzene sulfonate, sodium p-carbomethoxy benzene sulfonate, dipotassium 5-carbomethoxy-1,3-disulfonate, sodio 4-sulfo naphthalene-2,7-dicarboxylic acid, 4-lithio sulfophenyl-3,5-dicarboxy benzene sulfonate, 6-sodiosulfo-2-naphthyl-3,5-dicarbomethoxy benzene sulfonate and dimethyl 5-[4-(sodiosulfo) phenoxy] isophthalate. Other suitable sulfonate carboxylic acids and their ester forming derivatives are described in U.S. Patents 3,018,272 and 3,546,008 which are included herein by reference. The most preferred sulfonate polyesters are derived from sodium 3,5-dicarbomethoxy benzene sulfonate.

Preferred ionomer polyester polymer comprises divalent ionomer units represented by the formula IV: 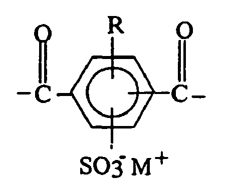 wherein R is hydrogen, halogen, alkyl or aryl, and M is a metal.

The most preferred polyester ionomer has the formula V: 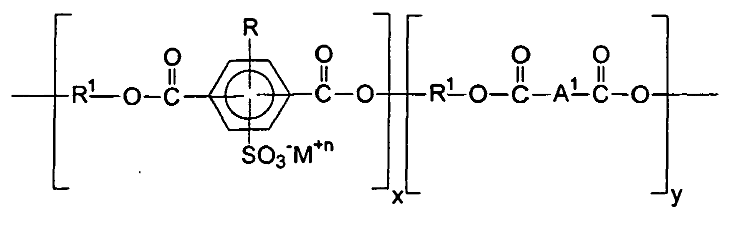 where the ionomer units, x, are from 0.1-50 mole percent of the polymer with 1.0 to about 20 mole percent being preferred. Most preferably R is hydrogen. When R is hydrogen, A¹ is phenylene, and R¹ is an alkylene radical of from C¹-C¹², preferably from C² or C⁴, and x and y are in mole percent, then x is from about 1 to about 20 percent, and more preferably from about 1 to about 10 percent.

Typical glycol or diol reactants, R¹, include straight chain, branched, or cycloaliphatic alkane diols and may contain from 2 to 12 carbon atoms. Examples of such diols include but are not limited to ethylene glycol; propylene glycol, i.e., 1,2- and 1,3-propylene glycol; butane diol, i.e., 1,3- and 1,4-butane diol; diethylene glycol; 2,2-dimethyl-1,3-propane diol; 2-ethyl, 2-methyl, 1,3-propane diol; 1,3- and 1,5-pentane diol; dipropylene glycol; 2-methyl-1,5-pentane diol; 1,6-hexane diol; dimethanol decalin, dimethanol bicyclo octane; 1,4-cyclohexane dimethanol and particularly its cis- and trans-isomers; triethylene glycol; 1,10-decane diol; and mixtures of any of the foregoing. A preferred cycloaliphatic diol is 1,4-cyclohexane dimethanol or its chemical equivalent. When cycloaliphatic diols are used as the diol component, a mixture of cis- to trans-isomers may be used, it is preferred to have a trans isomer content of 70% or more. Chemical equivalents to the diols include esters, such as dialkyl esters, diaryl esters and the like.

Examples of aromatic dicarboxylic acid reactants, as represented by the decarboxylated residue A¹, are isophthalic or terephthalic acid, 1,2-di(p-carboxyphenyl)ethane, 4,4'-dicarboxydiphenyl ether, 4,4' bisbenzoic acid and mixtures thereof. All of these acids contain at least one aromatic nucleus. Acids containing fused rings can also be present, such as in 1,4- 1,5- or 2,6-naphthalene dicarboxylic acids. The preferred dicarboxylic acids are terephthalic acid, isophthalic acid or mixtures thereof.

The most preferred ionomer polyesters are poly(ethylene terephthalate) (PET) ionomers, and poly(1,4-butylene terephthalate) ionomers, (PBT), and (polypropylene terephthalate) (PPT) ionomers.

Also contemplated herein are the above polyester ionomers with minor amounts, e.g., from about 0.5 to about 15 percent by weight, of units derived from aliphatic acid and/or aliphatic polyols to form copolyesters. The aliphatic polyols include glycols, such as poly(ethylene glycol) or poly(butylene glycol). Such polyesters can be made following the teachings of, for example, U.S. Patents 2,465,319 and 3,047,539.

The preferred poly(1,4-butylene terephthalate) ionomer resin used in this invention is one obtained by polymerizing an ionomer component comprising a dimethyl 5-sodium sulfo-1,3-phenylenedicarboxylate, from 1 to 10 mole %, a glycol component of at least 70 mole %, preferably at least 90 mole %, of tetramethylene glycol and an acid component of at least 70 mole %, preferably at least 90 mole %, of terephthalic acid, and polyester-forming derivatives thereof.

The glycol component should contain not more than 30 mole %, preferably not more than 20 mole %, of another glycol, such as ethylene glycol, trimethylene glycol, 2-methyl-1,3-propane glycol, hexamethylene glycol, decamethylene glycol, cyclohexane dimethanol, or neopentylene glycol.

The acid component should contain not more than 30 mole %, preferably not more than 20 mole %, of another acid such as isophthalic acid, 2,6-naphthalene dicarboxylic acid, 1,5-naphthalene dicarboxylic acid, 4,4'-diphenyldicarboxylic acid, 4,4'-diphenoxyethane dicarboxylic acid, p-hydroxy benzoic acid, sebacic acid, adipic acid and polyester-forming derivatives thereof.

It is also possible to use a branched polyester ionomer in which a branching agent, for example, a glycol having three or more hydroxyl groups has been incorporated. Furthermore, it is sometimes desirable to have various concentrations of acid and hydroxyl end groups on the polyester, depending on the ultimate end-use of the composition.

In some instances, it is desirable to reduce the number of acid end groups, typically to less than about 30 micro equivalents per gram, with the use of acid reactive species. In other instances, it is desirable that the polyester has a relatively high carboxylic end group concentration.

The composition may optionally contain impact modifiers such as a rubbery impact modifier. Preferably such impact modifiers are utilized in an amount less than about 30 %, and preferably from 1 to 25% by weight, more preferably less than about 20 percent, even more preferably less than about 15 percent by weight based on the total weight of the composition. Typical impact modifiers are derived from one or more monomers selected from the group consisting of olefins, vinyl aromatic monomers, acrylic and alkylacrylic acids and their ester derivatives as well as conjugated dienes. Especially preferred impact modifiers are the rubbery high-molecular weight materials showing elasticity at room temperature and below. They include both homopolymers and copolymers, including random, block, radial block, graft and core-shell copolymers as well as combinations thereof. Suitable modifiers include core-shell polymers built up from a rubber-like core on which one or more shells have been grafted. The core typically consists substantially of an acrylate rubber or a butadiene rubber. One or more shells typically are grafted on the core. The shell preferably comprises a vinylaromatic compound and/or a vinylcyanide and/or an alkyl(meth)acrylate. The core and/or the shell(s) often comprise multi-functional compounds, which may act as a cross-linking agent and/or as a grafting agent. These polymers are usually prepared in several stages.

Olefin-containing copolymers such as olefin acrylates and olefin diene terpolymers can also be used as impact modifiers in the present compositions. An example of an olefin acrylate copolymer impact modifier is ethylene ethylacrylate. Other higher olefin monomers can be employed in copolymers with alkyl acrylates, for example, propylene and n-butyl acrylate. The olefin diene terpolymers are well known in the art and generally fall into the EPDM (ethylene propylene diene) family of terpolymers. Polyolefins such as polyethylene, especially low density polyethylene (LDPE), and polyethylene copolymers with alpha olefins are also of use in these compositions. Polyolefin copolymers with gylcidyl acrylates or methacrylates may be especially effective in the impact modification of polyester containing blends. Terpolymers of ethylene with alkyl acrylates or methacrylates and glycidyl methacrylates may be especially preferred.

Styrene-containing polymers can also be used as impact modifiers. Examples of such polymers are acrylonitrile-butadiene-styrene (ABS), acrylonitrile-butadiene-alpha-methylstyrene, styrene-butadiene, styrene-butadiene-styrene (SBS), styrene-ethylene butylene-styrene (SEBS), methacrylate-butadiene-styrene (MBS), and other high impact styrene-containing polymers.

The polyolefin or SEBS rubbers can be further modified by reaction with maleic anhydride, itaconic anhydride and related unsaturated carboxylic acid anhydrides to give anhydride grafted rubbers.

Additionally, it may be desired to employ inorganic fillers to the thermoplastic resin provided the favorable properties are not deleteriously affected (sp?). Typical inorganic fillers include: alumina, amorphous silica, anhydrous alumino silicates, mica, wollastonite, clays, talc, metal oxides such as titanium dioxide, zinc sulfide, ground quartz, and the like. Low levels (0.1-10.0 wt. %) of very small particle size (largest particles less than 10 microns in diameter) are preferred.

The composition of the present invention may include additional components which do not interfere with the previously mentioned desirable properties but enhance other favorable properties such as antioxidants, lubricants, mold release materials, colorants, nucleants or ultraviolet (UV) stabilizers.

Flame-retardant additives are desirably present in an amount at least sufficient to reduce the flammability of the polyester resin, preferably to a UL94 V-0 rating. The amount will vary with the nature of the resin and with the efficiency of the additive. In general, however, the amount of additive will be from 2 to 30 percent by weight based on the weight of resin. A preferred range will be from about 15 to 20 percent.

Typically halogenated aromatic flame-retardants include tetrabromobisphenol A polycarbonate oligomer, polybromophenyl ether, brominated polystyrene, brominated BPA polyepoxide, brominated imides, brominated polycarbonate, poly (haloaryl acrylate), poly (haloaryl methacrylate), or mixtures thereof.

Examples of other suitable flame retardants are brominated polystyrenes such as polydibromostyrene and polytribromostyrene, decabromobiphenyl ethane, tetrabromobiphenyl, brominated alpha, omega - alkylene-bis-phthalimides, e.g. N,N'-ethylene-bis-tetrabromophthalimide, oligomeric brominated carbonates, especially carbonates derived from tetrabromobisphenol A, which, if desired, are end-capped with phenoxy radicals, or with brominated phenoxy radicals, or brominated epoxy resins.

The flame retardants are typically used with a synergist, particularly inorganic antimony compounds. Such compounds are widely available or can be made in known ways. Typical, inorganic synergist compounds include Sb₂O₅, SbS₃, sodium antimonate and the like. Especially preferred is antimony trioxide (Sb₂O₃). Synergists such as antimony oxides, are typically used at about 0.5 to 15 by weight based on the weight percent of resin in the final composition.

Also, the final composition may contain polytetrafluoroethylene (PTFE) type resins or copolymers used to reduce dripping in flame retardant thermoplastics.

The blends of this invention can be processed by various techniques including injection molding, blow molding, extrusion into sheet, film or profiles, compression molding and etc. They can also be formed into a variety of articles for use in, for example; electrical connectors, electrical devices, computers, personal electronics, building and construction, outdoor equipment, recreational equipment, trucks and automobiles.

### EXAMPLES

The following examples illustrate the present invention, but are not meant to be limitations to the scope thereof. The examples of Tables were all prepared and tested in a similar manner:

All ingredients of the blend where tumbled together for 1-5 min. at room temperature and fed into a 30 mm twin screw extruder where they were melted and mixed at 485°F; 300 rpm using vacuum venting. All ingredients were throat fed. The compounded strands were cooled in a water bath, blown dry with air and chopped into pellets. Samples were dried for 4h at 150°F in a dehumidifying hopper dryer prior to injection molding.

Samples were injection molded on an 85 ton molding machine using the following conditions: barrel temperature, 480°F; mold temperature, 120°F; cycle time, 37 sec. Tensile elongation at break was tested on 7x1/8 in. injection molded bars with a crosshead speed of 2 in./min. using ASTM method D648.

Polyester sodium sulfonate ionomer resins were made by melt reaction of dimethyl terephthalate (DMT), butane diol and sodium sulfo dimethyl isophthalate. The sodium sulfo isophthalate was used at 3 or 5 mole % based on DMT content. The blend was heated with 100-200 ppm titanium octyl titanate catalyst under vacuum until the desired viscosity was achieved. The reaction was cooled and the resin isolated and granulated for compounding and blending.

Table 1 shows an illustrative series of cycloaliphatic polyester/polyamide alloys with a compatibilizing amount of a sodium sulfo-isophthalate containing polyester ionomer. It was impossible to mold parts from control blends produced in the absence of a compatibilizing amount of sodium sulfo-isophthalate containing polyester. Accordingly, physical and mechanical property performance for these alloys are not indicated in the table. The fact that parts were molded and tested alone supports the significant step forward achieved by use of this compatibilizing agent.

**Table 1:**

| **Formulation [%]** | | | | | | |
|---|---|---|---|---|---|---|
| | **-1** | **-2** | **-3** | **-4** | **-5** | **-6** |
| PCCD 2k poise | 67.8 | 66.4 | 65.0 | 67.8 | 66.4 | 65.0 |
| Nylon-6 | 29.0 | 28.5 | 27.8 | 29.0 | 28.5 | 27.8 |
| PBTi (1%) | 1.0 | 3.0 | 5.0 | | | |
| PBTi (3%) | | | | 1.0 | 3.0 | 5.0 |
| Antioxidant 1010 | 0.2 | 0.2 | 0.2 | 0.2 | 0.2 | 0.2 |
| Seenox 412S | 0.3 | 0.3 | 0.3 | 0.3 | 0.3 | 0.3 |
| Irgafos 168 | 0.2 | 0.2 | 0.2 | 0.2 | 0.2 | 0.2 |
| HALS CGL-374 | 0.2 | 0.2 | 0.2 | 0.2 | 0.2 | 0.2 |
| Tinuvin 234 | 0.3 | 0.3 | 0.3 | 0.3 | 0.3 | 0.3 |
| TiO2 | 1.0 | 1.0 | 1.0 | 1.0 | 1.0 | 1.0 |
| | 100.0 | 100.0 | 100.0 | 100.0 | 100.0 | 100.0 |

| **Performance** | | | | | | |
|---|---|---|---|---|---|---|
| Notched IZOD (ft.lbs./in., RT) | 1.5 | 1.4 | 3.4 | 2.0 | 2.2 | 1.7 |
| Dynatup @ 22°C Total Energy (ft. lbs.) | 48.3 | 39.2 | 43.5 | 45.3 | 46.6 | 45.9 |
| Tensile Elongation (%) | 612 | 571 | 606 | 776 | 779 | 785 |
| Tensile Break Strength (psi) | 4199 | 4406 | 2797 | 5430 | 5108 | 5180 |
| Flex. Strength (psi); Zwick | 8695 | 8996 | 9160 | 8625 | 8973 | 9105 |
| Flex. Modulus (psi); Zwick | 182766 | 189360 | 194290 | 180925 | 187176 | 191365 |
| HDT @ 264 psi | 57 | 56 | 57 | 55 | 55 | 56 |
| Specific Gravity | 1.16 | 1.16 | 1.15 | 1.15 | 1.15 | 1.15 |
| | A16147-1 | A16147-2 | A16147-3 | A16147-4 | A16147-5 | A16147-6 |

## Claims

1. A thermoplastic resin composition comprising a polyamide resin, a cycloaliphatic polyester resin, and a compatibilizing amount of a polyester ionomer for enhancing the properties of the blend; wherein the cycloaliphatic polyester is comprised of cycloaliphatic diacid and cycloaliphatic diol units..

2. A thermoplastic resin composition according to claim 1 wherein the said resin blend comprises 2 to 40 wt.% polyester sulfonate salt ionomer based on the weight of polyamide resin and polyester ionomer.

3. A thermoplastic resin composition according to claim 2 wherein the ratio of polyamide resin to cycloaliphatic polyester resin is from 50:50 to 30:70

4. A thermoplastic resin composition according to claim 1 where the polyester is polycyclohexane dimethanol cyclohexane dicarboxylate (PCCD).

5. A thermoplastic resin composition according to claim 1 wherein said polyester ionomer comprises an alkylene aryl polyester copolymer having metal sulfonate units represented by the formula IIIA: 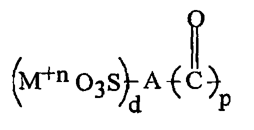 or the formula IIIB:
(M⁺ⁿ O₃S)_{d}-A-(OR"O)ₚ-
where p=1-3, d=1-3, p+d=2-6, n = 1-5, M is a metal, and A is an aryl group containing one or more aromatic rings where the sulfonate substituent is directly attached to an aryl ring, R" is a divalent alkyl group and the metal sulfonate group is bound to the polyester through ester linkages.

6. A thermoplastic resin composition according to claim 5 wherein p=2, d=1, and M is an alkaline or alkaline earth metal.

7. A thermoplastic resin composition of claim 5 where the metal sulfonate polyester copolymer (a) has the formula V: 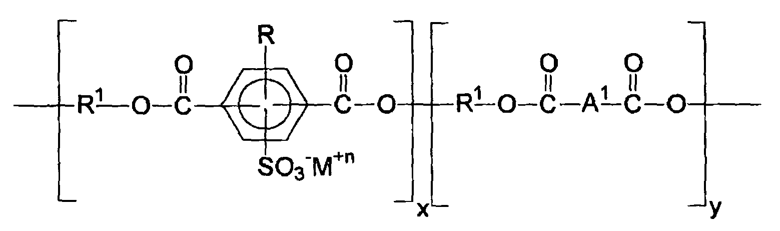 where the ionomer units, x, are from 0.1-50 mole %, R is halogen, alkyl, aryl, alkylaryl or hydrogen, R¹ is derived from a diol reactant comprising straight chain, branched, or cycloaliphatic alkane diols and containing from 2 to 12 carbon atoms, A¹ is a divalent aryl radical.

8. A thermoplastic resin composition of claim 7 wherein R is hydrogen, x = 1.0-10 mole percent, R¹ is C₂-C₈ alkyl, and A¹ is derived from iso- or terephthalic acid or a mixture of the two.

9. A thermoplastic resin composition of claim 7 wherein the metal sulfonate polyester of formula III is an alkylene polyester, wherein A¹ is the residue from a diacid component of iso- or tere- phthalic acid and derivatives thereof, and R¹ is the residue from a diol component selected from the group consisting essentially of ethylene glycol, propanediol, butanediol, or cyclohexanedimethanol, and derivatives thereof.

10. A thermoplastic resin composition of claim 9 wherein said blend further comprises an impact modifier.

## Patentansprüche

1. Eine thermoplastische Harzzusammensetzung aufweisend ein Polyamidharz, ein cycloaliphatisches Polyesterharz und einen verträglich machenden Gehalt eines Polyesterionomers zur Verbesserung der Eigenschaften des Blends; wobei der cycloaliphatische Polyester aus cycloaliphatischen Disäuren und cycloaliphatischen Dioleinheiten zusammengesetzt ist.

2. Thermoplastische Harzzusammensetzung nach Anspruch 1, wobei der Harzblend 2 bis 40 Gew.-% Polyestersulfonatsalzionomer aufweist bezogen auf das Gewicht des Polyamidharzes und des Polyesterionomers.

3. Thermoplastische Harzzusammensetzung nach Anspruch 2, wobei das Verhältnis von Polyamidharz zu cycloaliphatischem Polyesterharz zwischen 50 : 50 und 30 : 70 ist.

4. Thermoplastische Harzzusammensetzung nach Anspruch 1, wobei der Polyester Polycyclohexandimethanolcyclohexandicarboxylat (PCCD) ist.

5. Thermoplastische Harzzusammensetzung nach Anspruch 1, wobei das Polyesterionomer ein Alkylenarylpolyestercopolymer aufweist, welches Metallsulfonateinheiten hat, dargestellt durch die Formel IIIA: 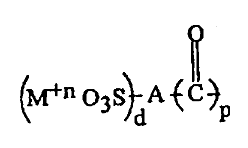 oder die Formel IIIB:
(M⁺ⁿ O₃S)_{d}-A-(OR"O)ₚ-
wo p = 1 - 3, d = 1 - 3, p + d = 2 - 6, n = 1 - 5, M ein Metall ist und A eine Arylgruppe ist, enthaltend ein oder mehrere aromatische Ringe, wo der Sulfonatsubstituent direkt an einen Arylring gebunden ist, R" eine divalente Alkylgruppe ist und die Metallsulfonatgruppe über Esterbindungen an den Polyester gebunden ist.

6. Thermoplastische Harzzusammensetzung nach Anspruch 5, worin p = 2, d = 1 und M ein Alkali- oder Erdalkalimetall ist.

7. Thermoplastische Harzzusammensetzung nach Anspruch 5, wo das Metallsulfonatpolyestercopolymer (a) die Formel V hat: 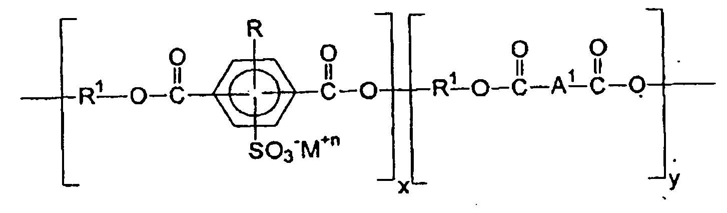 wo die Ionomereinheiten, x, 0,1 bis 50 Mol-% betragen, R Halogen, Alkyl, Aryl, Alkylaryl oder Wasserstoff ist, R¹ abgeleitet ist von einem Diolreagenz umfassend geradkettige, verzweigte oder cycloaliphatische Alkandiole enthaltend 2 bis 12 Kohlenstoffatome, A¹ ein divalenter Arylrest ist.

8. Thermoplastische Harzzusammensetzung nach Anspruch 7, worin R Wasserstoff ist, x = 1,0 - 10 Mol-%, R¹ C₂-C₈ Alkyl ist und A¹ abgeleitet ist von Iso- oder Terephthalsäure oder einer Mischung der beiden.

9. Thermoplastische Harzzusammensetzung nach Anspruch 7, worin der Metallsulfonatpolyester der Formel III ein Alkylenpolyester ist, worin A¹ der Rest einer Disäurekomponente der Iso- oder Terephthalsäure und Derivaten davon ist und R¹ der Rest einer Diolkomponente ist ausgewählt aus der Gruppe bestehend im Wesentlichen aus Ethylenglykol, Propandiol, Butandiol oder Cyclohexandimethanol und Derivaten davon.

10. Thermoplastische Harzzusammensetzung nach Anspruch 9, wobei der Blend weiterhin einen Schlagzähmodifizierer umfasst.

## Revendications

1. Composition de résine thermoplastique comprenant une résine de polyamide, une résine de polyester cycloaliphatique et une quantité, permettant d'obtenir un compatibilité, d'un ionomère de polyester permettant d'améliorer les propriétés du mélange ; dans laquelle le polyester cycloaliphatique est composé de diacide cycloaliphatique et d'une unité diol cycloaliphatique.

2. Composition de résine thermoplastique selon la revendication 1, dans laquelle ledit mélange de résine comprend 2 à 40 % en poids d'ionomère de sel de sulfonate de polyester sur la base du poids de la résine de polyamide et de l'ionomère de polyester.

3. Composition de résine thermoplastique selon la revendication 2, dans laquelle le rapport entre la résine de polyamide et la résine de polyester cycloaliphatique est compris entre 50/50 et 30/70.

4. Composition de résine thermoplastique selon la revendication 1, dans laquelle le polyester est du PCCD (polycyclohexane dimethanol cyclohexane dicarboxylate).

5. Composition de résine thermoplastique selon la revendication 1, dans laquelle ledit ionomère de polyester comprend un copolymère de polyester - alkylène aryle ayant des unités de sulfonate métallique représentées par la formule IIIA : 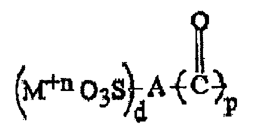 ou la formule IIIB :
(M⁺ⁿ O₃S)_{d}-A-(OR"O)ₚ-
où p = 1-3, d = 1-3, p + d = 2-6, n = 1-5, M est un métal, et A est un groupe aryle contenant un ou plusieurs noyaux aromatiques, le substituant sulfonate étant directement fixé à un noyau aryle, R" est un groupe d'alkyle divalent et le groupe de sulfonate de métallique est lié au polyester par le biais de liaisons ester.

6. Composition de résine thermoplastique selon la revendication 1, dans laquelle p = 2, d = 1 et M est un groupe alcalin ou un métal alcalino-terreux.

7. Composition de résine thermoplastique selon la revendication 5, dans laquelle le copolymère polyester - sulfonate métallique (a) présente la formule V : 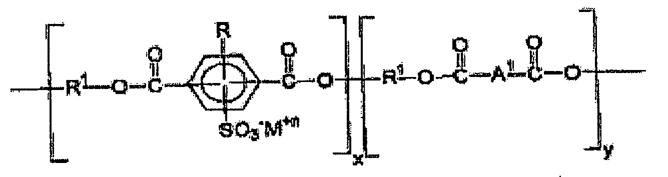 où les unités ionomères, x, sont comprises entre 0,1 et 50 % en moles, R est un groupe halogène, alkyle, aryle, alkylaryle ou hydrogène, R¹ est dérivé d'un réactif diol comprenant des diols alcane cycloaliphatiques, ramifiés ou à chaîne droite et contenant 2 à 12 atomes de carbone, A¹ est un radical aryle divalent.

8. Composition de résine thermoplastique selon la revendication 7, dans laquelle R est le groupe hydrogène, x = 1,0-10 % en moles, R¹ est le groupe alkyle en C₂ à C₈ et A¹ est dérivé de l'acide iso- ou téréphtalique ou d'un mélange des deux.

9. Composition de résine thermoplastique selon la revendication 7, dans laquelle le polyester contenant le sulfonate métallique de formule III est un polyester d'alkylène, dans laquelle A¹ est le résidu d'un composant diacide d'acide iso- ou téréphtalique et des dérivés de ceux-ci, et R¹ est le résidu d'un composant diol sélectionné dans le groupe composé essentiellement d'éthylène glycol, propanediol, butanediol ou cyclohexanediméthanol et les dérivés de ceux-ci.

10. Composition de résine thermoplastique selon la revendication 9, dans laquelle ledit mélange comprend en outre un modificateur d'impact.
